# EUROPÄISCHE PATENTSCHRIFT

(11) **EP 2 241 173 B1**
(45) Veröffentlichungstag und Bekanntmachung des Hinweises auf die Patenterteilung: **12.12.2012**
(21) Anmeldenummer: 09005387.7
(22) Anmeldetag: 15.04.2009
(51) Int. Cl.: A01D 34/82, A01D 34/90, E01H 11/00

(54) **Schutzeinrichtung für die mechanische Wildkrautenfernung**
Protective device for mechanical removal of weeds
Dispositif de protection pour la suppression mécanique des mauvaises herbes

(43) Veröffentlichungstag der Anmeldung: 20.10.2010
(73) Patentinhaber: Weber Bürstensysteme GmbH, 65520 Bad Camberg (DE)
(72) Erfinder: Klier, Frank, 65520 Bad Camberg (DE)
(74) Vertreter: Weilnau, Carsten

(56) Entgegenhaltungen:
- EP-A1- 1 746 211
- GB-A- 1 448 945
- US-A1- 2005 183 269
- US-A1- 2008 289 194

## Beschreibung

Die vorliegende Erfindung betrifft eine Schutzeinrichtung für eine tragbare Vorrichtung zur mechanischen Entfernung von Wildkraut auf befestigten Flächen. Sie betrifft insbesondere eine Schutzeinrichtung für eine Motorsense oder einen Freischneider, die oder der mit einem als Wildkrautbürste ausgebildeten Tellerbesen zur Entfernung von Bewuchs und Verschmutzungen sowie Erd- oder Sandablagerungen auf befestigten Bodenflächen ausgestattet ist.

### Stand der Technik

Motorsensen und Freischneider, insbesondere tragbare Motorsensen sind im Stand der Technik in vielfältigen Ausgestaltungen bekannt. Eine Bedienperson hält und führt die tragbare Motorsense an einem Traggestell, welches zu diesem Zweck im Allgemeinen zwei Griffe aufweist. Typische Motorsensen weisen zudem ein eine Antriebswelle verkleidendes Rohr auf, an dessen unteren Ende das Schneidwerkzeug, beispielsweise eine drehbare gelagerte Wildkrautbürste angeordnet ist.

Für deren Antrieb ist andern Ends des Rohrs ein Motor, insbesondere ein Verbrennungsmotor, je nach Ausgestaltung ggf. ein Elektromotor vorgesehen.

Zur mechanischen Beseitigung von Wildkraut, d. h. von Bewuchs und Beschmutzungen auf befestigten Flächen, insbesondere Gehwegen, Bord- und Rinnsteinen sowie gepflasterten Flächen weist die Wildkrautbürste typischerweise einen vom Motor drehbar antreibbaren Teller auf. An diesem sind einzelne, über den Umfang des Tellers regelmäßig verteilt angeordnete Borstenbüschel angeordnet, wobei einzelne Borstenbüschel beispielsweise als ein in einer Fassung eingequetschter Drahtseilabschnitt ausgebildet sein können.

Eine beispielsweise in der DE 91 12 996 U1 beschriebene Motorsense weist einen Verbrennungsmotor auf, welcher am oberen Ende eines Längsrohrs eines Traggestells angeordnet ist. Am unteren Ende des Längsrohres ist ein Arbeitskopf angeflanscht. Dieser umfasst ein Winkelgetriebe und eine hieran fest montierte Abdeckhaube.

Aus der EP 1 746 211 A1 ist eine Schutzeinrichtung für den Erweiterungsteil eines Unkrautmähers bekannt. Eine Abdeckplatte dieser Schutzhaube ist jedoch aus rostfreiem Stahl gefertigt. Nach unten an diese Platte schließt sich eine halbkreisartige Schürze aus Plastik, etwa aus Polyethylen einer geeigneten Dicke an Hierfür ist Polyethylen mit einer solchen Plattendicke zu verwenden, so dass eine feste, nur geringfügig deformierbare Schürze bereitgestellt wird, die insbesondere zum Auffangen von Stahldrahtstücken, die zentrifugal vom Mäher weggeschleudert werden, dienen kann.

Die US 2008/0289194 A1 beschreibt ferner einen Rasenkantenschneider mit einer schürzenartigen Schutzeinrichtung aus einem Polymermaterial.

Aus der US 2005/0183269A1 ist zudem ein Rasenkantenschneider mit einem Schutzschirm und einem an einem Schaft des Schneiders höhenverstellbar angeordneten geradlinigen Besenelement bekannt. Um hiermit eine Schutzwirkung zu erzielen, ist es unbedingt erforderlich, dass der Anwender den Rasenkantenschneider immer in einem vorgegebenen Winkel hält, damit sowohl ein Schneidekopf als auch das freie Ende des Besenelements mit der zu bearbeitenden Fläche in Kontakt bleiben.

Es gestaltet sich hierbei als nachteilig, dass die Abdeckhaube die Wildkrautbürste nur bereichsweise einfasst. Von daher geht von solchen Motorsense ein immenses verletzungs- und gesundheitsgefährdendes Potenzial für den Bediener der Motorsense, aber auch für unbeteiligte Dritte aus. Gerade beim Reinigen von befestigten Flächen besteht die Gefahr, dass herumliegende Gegenstände, insbesondere Steine, von der rotierenden Bürste erfasst und über relative weite Distanzen unkontrolliert weggeschleudert werden.

Solch bekannte Schutzeinrichtungen sind für die typischerweise von Motorsensen zur Verfügung gestellte Motorleistung im Bereich einiger Kilowatt als ungenügend zu beurteilen.

Der vorliegenden Erfindung liegt demgegenüber die Aufgabe zugrunde, eine Schutzeinrichtung für eine Motorsense oder einen Freischneider zur Verfügung zu stellen, die einerseits das von der Motorsense ausgehende Verletzungspotenzial weitgehend minimiert und andererseits den bestimmungsgemäßen Gebrauch der Motorsense oder des Freischneiders, insbesondere bei der Entfernung von Wildkraut und Bewuchs von befestigten Flächen nicht oder man kaum merklich beeinträchtigt. Zudem soll die Schutzeinrichtung die Handhabung der Motorsense oder des Freischneiders vereinfachen.

Die der Erfindung zugrundeliegende Aufgabe wird mit einer Schutzeinrichtung gemäß Patentanspruch 1 sowie einer Wildkraut beseitigungsvorrichtung, gemäß Patentanspruch 14 gelöst. Einzelne vorteilhafte Ausgestaltungen der Erfindung sind in den abhängigen Patentansprüchen angegeben.

Die erfindungsgemäße Schutzeinrichtung ist für eine tragbare Vorrichtung zur mechanischen Entfernung von Wildkraut auf befestigten Flächen vorgesehen und zur Befestigung an einer solchen Vorrichtung, einer Wildkrautbeseitigungsvorrichtung ausgelegt. Eine Wildkrautbeseitigungsvorrichtung im Sinne der Erfindung ist typischerweise als tragbare Motorsense oder als tragbarer Freischneider ausgebildet. Daneben ist die Schutzeinrichtung universell auch mit anderen Reinigungs- oder Schneidgeräten, z.B. für Kantenschneider sowie für fahrbare Wildkrautbeseitigungs- oder Reinigungseinrichtungen anwendbar.

Die Schutzeinrichtung weist eine Schutzhaube auf, die an ihrer Oberseite eine Durchgangsöffnung für eine mit einer Wildkrautbürste in Wirkverbindung stehende Welle aufweist. Die Schutzhaube umschließt dabei die drehbar gelagerte Wildkrautbürste in Umfangsrichtung zumindest bereichsweise.. Die Oberseite der Schutzhaube ist abgesehen von der erwähnten Durchgangsöffnung vorzugsweise nahezu vollständig geschlossen ausgebildet. Mit der Oberseite der Schutzhaube ist im Sinne der Erfindung jene Seite gemeint, die in Gebrauchsstellung der Wildkrautbeseitigungsvorrichtung der befestigten und zu bearbeitenden, bzw. zu reinigenden Fläche abgewandt ist. Das Antriebsglied, welches die Durchgangsöffnung der Schutzhaubenoberseite durchsetzt, ist typischerweise als Antriebswelle ausgebildet, die das von einem Motor zur Verfügung gestellte Drehmoment auf die von der Schutzhaube umfasste und drehbar gelagerte Wildkrautbürste überträgt.

Nach der Erfindung ist insbesondere vorgesehen, dass an der Unterseite der Schutzhaube ein flexibel deformierbares Schutzelement angeordnet ist. Das Schutzelement ist folglich an der in Gebrauchsstellung der Wildkrautbeseitigungsvorrichtung befestigten Fläche zugewandten Unterseite der Schutzhaube angeordnet und daran befestigt.

Durch die Ausgestaltung eines flexibel deformierbaren Schutzelements, welches sich vorzugsweise entlang des gesamten unteren Randabschnitts der Schutzhaube erstreckt, kann in einfacher Art und Weise erreicht werden, dass die Schutzeinrichtung im Betrieb der Motorsense mit ihrem elastisch oder flexibel deformierbaren Schutzelement zumindest bereichsweise, wenn nicht gar vollständig, auf die befestigte Fläche abgesenkt werden kann. Hierdurch kann erreicht werden, dass die Schutzhaube mit ihrem nach unten ragenden Schutzelement quasi abdichtend über der befestigten Fläche entlang gleiten kann. Ein unkontrolliertes Heraus- und Wegschleudern von festen Gegenständen, insbesondere von auf der befestigten Fläche herumliegenden Steinen kann somit in einfacher Art und Weise verhindert werden.

Dadurch, dass das mit der befestigten Fläche in Kontaktstellung gelangende Schutzelement besonders flexibel und elastisch deformierbar ist, wird die bestimmungsgemäße Anwendung der Motorsense oder des Freischneiders durch die Schutzeinrichtung kaum beeinträchtigt.

Zwar können auch solche Schutzhauben ohne flexibel deformierbares Schutzelement eine annähernd vergleichbare Schutzwirkung wie die erfindungsgemäße Schutzeinrichtung zur Verfügung stellen. Deren unterer, zur Fläche hin gewandter Rand ist jedoch nicht elastisch oder flexibel ausgebildet, sodass sich die gesamte Schutzhaube im Betrieb der Motorsense als hinderlich erweist, insbesondere dann, wenn die starr ausgebildete Schutzhaube auf der befestigten Fläche entlang schrammt, wobei durch Unebenheiten der Fläche durchaus ein für den Anwender gefährliches Verkanten von Schutzhaube und Untergrund auftreten kann. In der Praxis konnte daher schon mehrfach beobachtet werden, dass die Bediener bekannter Motorsensen dazu übergehen, die Schutzeinrichtung zu entfernen, wodurch das von der Motorsense ausgehende gesundheitsgefährdende Verletzungspotenzial erheblich steigt.

Mit dem als flexible Lippe, insbesondere als Dichtlippe fungierenden, flexibel deformierbaren erfindungsgemäßen Schutzelement können diese bekannten Nachteile und Mängel in einfacher Art und Weise ausgeräumt und umgangen werden.

Es ist dabei für die Erfindung ferner vorgesehen, dass das Schutzelement eine Vielzahl elastisch deformierbarer Borsten aufweist. Diese Borsten weisen mit ihren freien Enden nach unten, nämlich zur zu bearbeitenden Fläche hin. Sie sind andern Ends am unteren Randabschnitt der Schutzhaube, insbesondere an deren umlaufenden Rand, befestigt. Die Borsten können als Kunststoff- oder Metallborsten ausgebildet sein, wobei für ein reibungsarmes Hinweggleiten über der befestigten Fläche, Kunststoff-, insbesondere Nylonborsten, zu bevorzugen sind. Je nach Borstengeometrie und verwendetem Borstenmaterial kann der Reibungswiderstand gegenüber der befestigten Fläche als auch die Schutzwirkung gezielt beeinflusst und manipuliert werden.

Nach einer ersten vorteilhaften Ausgestaltung der Erfindung ist vorgesehen, dass die Schutzhaube eine in Gebrauchsstellung im Wesentlichen parallel zur befestigten Fläche ausgerichtetes Oberteil aufweist, in welchem die Durchgangsöffnung für die Welle ausgebildet ist. Das Oberteil kann beispielsweise scheibenartig, zumindest bereichsweise scheibenartig oder aber auch entsprechend gewölbt ausgebildet sein. Typischerweise weist die Schutzhaube eine kalotten-, zylinder- oder topfartige Grundgeometrie auf. Dem Anwender zugewandt weist sie eine geschlossene Kontur auf, um ein unkontrolliertes Verteilen und Ausbreiten des von der Motorsense entfernten Wildkrauts oder Schnittguts zu verhindern.

Nach einer Weiterbildung ist dabei vorgesehen, dass die Schutzhaube einen zumindest bereichsweise ringförmig ausgebildeten und die Wildkrautbürste zumindest bereichsweise umschließenden Rand aufweist, an welchem das Schutzelement die Wildkrautbürste zumindest bereichsweise umschließend angeordnet ist. Dabei ist insbesondere vorgesehen, dass der Rand mit dem scheibenartig und/oder kalottenartig ausgebildeten Oberteil einstückig verbunden oder entsprechend daran angeformt ist. Der zumindest bereichsweise umlaufende Rand erstreckt sich in Gebrauchsstellung der Wildkrautbeseitigungsvorrichtung vorzugsweise senkrecht zur befestigten Fläche. Mit anderen Worten verläuft die Flächennormale des nach Art einer Zylinderwand ausgebildeten Rands im Wesentlichen parallel zur zu reinigenden befestigten Fläche.

Nach einer weiteren bevorzugten Ausführungsform der Erfindung ist vorgesehen, dass das Schutzelement als elastisch deformierbares Band aus Kunststoff, vorzugsweise aus Polyvinylchlorid (PVC), höchstvorzugsweise aus Weich-PVC (PVC-P) ausgebildet ist. Durch die Ausgestaltung des Schutzelements aus Weich-PVC ergeben sich kaum oder nur geringste Beeinträchtigungen im Betrieb der Motorsense. Die Schutzeinrichtung bzw. die Schutzhaube kann hierdurch besonders reibungsarm und störungsfrei über die befestigte Fläche hinweg gleiten.

Darüber hinaus ist ein derartig ausgebildetes Schutzelement kostengünstig in der Herstellung. Es ist daneben besonders einfach, mit nur wenigen Montageschritten an der Schutzhaube zu befestigen.

Nach einer Weiterbildung der Erfindung ist vorgesehen, dass die Schutzhaube selbst aus Kunststoff, insbesondere aus einem thermoplastischen Elastomer gefertigt ist. So kann die Schutzhaube als Spritzgussteil oder aber auch als tiefgezogenes oder entsprechend umgeformtes Kunststoffbauteil mit einem Oberteil und einem Rand ausgebildet sein.

Nach einer Weiterbildung ist vorgesehen, dass das Schutzelement unter Bildung eines Überdeckungsbereichs am Rand der Schutzhaube anliegt und mittels eines Halterings dort befestigt ist. Dabei kann insbesondere vorgesehen sein, dass das vorzugsweise aus Weich-PVC gefertigte Schutzband außen oder innen am Rand der Schutzhaube anliegt und dass der Haltering, welcher vorzugsweise aus Metall gefertigt sein kann, an der Außenseite des Schutzelements zur Anlage gelangt. Der Haltering kann beispielsweise als Schelle ausgebildet sein, die mit einem geeigneten Schließmechanismus eine radial nach innen gerichtete und zur Fixierung des Schutzelements ausreichende Kraft auf das Schutzelement und den Rand der Schutzhaube aufbringen kann.

Daneben kann jedoch auch vorgesehen sein, form- oder kraftschlüssige Haltemittel, wie etwa Klebstoffe, Nieten oder Schrauben zu verwenden, um den Haltering mit dem dazwischen angeordneten Schutzelement am Rand der Schutzhaube zu befestigen.

Nach einer weiteren vorteilhaften Ausgestaltung der Erfindung ist vorgesehen, dass der Innendurchmesser der in der Schutzhaube ausgebildeten Durchgangsöffnung etwa 1/3 bis 2/3, vorzugsweise etwa 1/2 des Innendurchmessers der Schutzhaube beträgt. Die Größe und die geometrische Ausgestaltung der Durchgangsöffnung ist insbesondere an die zu verwendende Wildkrautbürste, bzw. an eine entsprechende Bürstenaufnahme oder einen Bürstenkopf der Motorsense angepasst.

Des Weiteren kann vorgesehen sein, dass die Schutzhaube, das flexible Schutzelement und/oder der Schutzhaubenrand die drehbar antreibbare Wildkrautbürste in Umfangsrichtung in einem Winkelbereich von 220° bis 300°, vorzugsweise von 240° bis 280° und höchstvorzugsweise von 250° bis 270° umschließen. Der von der Schutzhaube nicht umschlossene Teil bildet eine seitliche Öffnung, die insbesondere zum Abtransport des von der befestigten Flächen entfernten Wildkrauts dient.

Dadurch, dass die Schutzhaube ansonsten vollständig geschlossen und durchgehend ausgebildet sein kann, ergibt sich durch die Kombination der seitlichen Öffnung und der im Oberteil ausgebildeten Durchgangsöffnung im Betrieb der Motorsense eine besondere Sogwirkung, der zu Folge die Schutzeinrichtung mitsamt dem mit ihr in Wirkverbindung stehenden Bearbeitungsende der Motorsense, zur befestigten Fläche hin gezogen wird. Durch den Abtransport von entferntem Wildkraut durch die seitliche Öffnung, aber auch durch die hohe Rotationsgeschwindigkeit der Bürste selbst und einem damit einhergehenden aerodynamischen Effekt, wird durch die im Oberteil befindliche Durchgangsöffnung Luft nach unten angesaugt. Durch diesen Sog erfährt die Schutzeinrichtung und somit die gesamte Motorsense eine zur befestigten Fläche hin gerichtete Zugkraft.

Nach einer Weiterbildung der Erfindung kann vorgesehen sein, dass die Schutzhaube, insbesondere ihr Rand oder/oder das flexibel deformierbare Schutzelement in Umfangsrichtung die Wildkrautbürste vollständig umschließend ausgebildet sind. In diesem Fall weist die Schutzhaube typischerweise eine im Wesentlichen kalottenartige oder zylindrische Grundgeometrie auf.

Nach einer weiteren Ausgestaltung der Erfindung kann vorgesehen sein, die seitliche Öffnung der Schutzhaube mittels einer nach oben aufklappbaren Klappe zu verschließen. Die Klappe kann dabei beispielsweise aus einem flexibel deformierbaren Material, insbesondere aus demselben Material wie das bandartig ausgebildete Schutzelement ausgebildet sein.

Nach einer weiteren Ausgestaltung der Erfindung ist vorgesehen, dass die Schutzhaube schwenkbar an der tragbaren Wildkrautbeseitigungsvorrichtung anordenbar ist. Auf diese Art und Weise kann erreicht werden, dass die Schutzhaube im Betrieb stets parallel zur zu reinigenden befestigten Fläche ausgerichtet ist, und zwar unabhängig von der Ausrichtung der Antriebswelle der Wildkrautbeseitigungsvorrichtung.

Dabei kann weiterhin vorgesehen sein, dass an gegenüberliegenden Abschnitten des Schutzhaubenrandes, zur schwenkbaren Befestigung der Schutzhaube an der Wildkrautbeseitigungsvorrichtung, ein Haltebügel angelenkt ist. Der Haltebügel steht dabei vorzugsweise mit dem Antriebsglied, insbesondere mit der Antriebswelle oder einer die Welle einfassenden Ummantelung in direkter Wirkverbindung. Insbesondere ist vorgesehen, den Haltebügel starr und unbeweglich am Antriebsglied der Wildkrautbeseitigungsvorrichtung anzuordnen und die Schutzeinrichtung, insbesondere die Schutzhaube, schwenkbar am Haltebügel zu lagern.

Dabei kann ferner vorgesehen werden, dass der Haltebügel, der Haltering, die Schutzhaube selbst oder ihr Rand und/oder das flexible Schutzelement an einem oder an mehreren gemeinsamen Befestigungspunkten, welche zugleich eine Schwenkachse für die schwenkbare Lagerung der Schutzhaube gegenüber dem Haltebügel darstellen, miteinander verbunden sind.

Nach einem weiteren, Aspekt betrifft die Erfindung eine Wildkrautbeseitigungsvorrichtung, insbesondere eine Motorsense oder einen Freischneider zur Beseitigung von Wildkraut auf befestigten Flächen mit einer von einem Motor antreibbaren Wildkrautbürste und einer zuvor beschriebenen erfindungsgemäßen Schutzeinrichtung.

### Ausführungsbeispiele

Weitere Ziele, Merkmale sowie vorteilhafte Ausgestaltungen der Erfindung sind in der nachfolgenden Beschreibung eines Ausführungsbeispiels unter Bezugnahme auf die Zeichnungen dargestellt. Es zeigen:
- Fig. 1: eine perspektivische Darstellung einer am Kopf einer Motorsense befestigten Schutzeinrichtung,
- Fig. 2: eine perspektivische Darstellung der Schutzhaube,
- Fig. 3: eine perspektivische Darstellung der die Schutzhaube und einen Haltebügel aufweisenden Schutzeinrichtung,
- Fig. 4: eine schematische Darstellung der Schutzhaube von oben gesehen und
- Fig. 5: eine perspektivische Darstellung von Schutzhaube, Haltering und Schutzelement in Explosionsdarstellung.

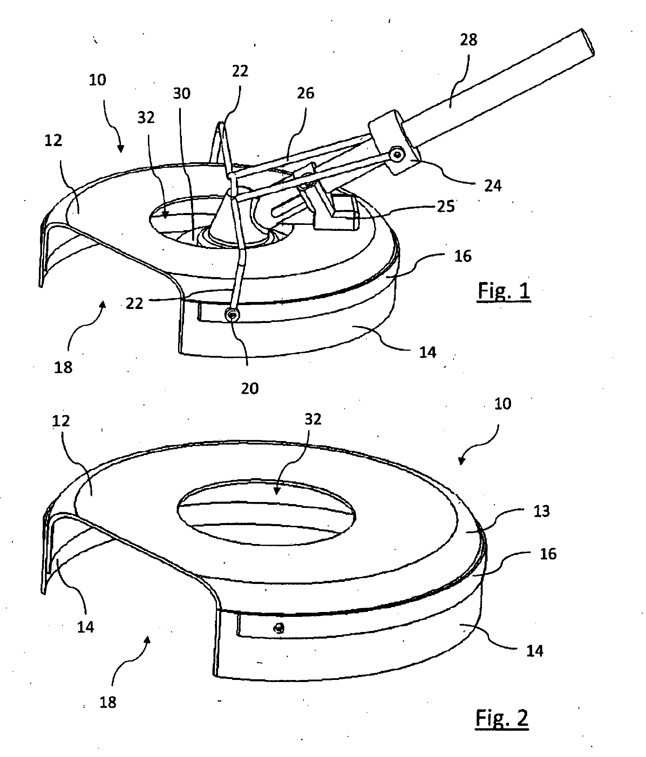

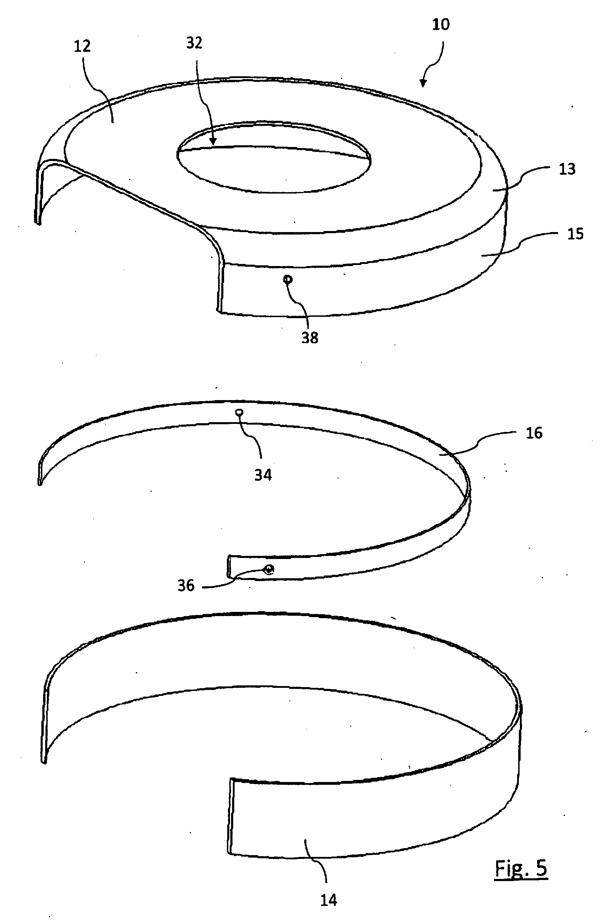

Die in den Fig. 2 und 5 gezeigte Schutzhaube 10 weist ein scheibenartig ausgebildetes Oberteil 12 auf, welches über einen bereichsweise umlaufenden, nach unten umgebogenen Abschnitt 13 in einen sich im Wesentlichen senkrecht zur Ebene des Oberteils 12 erstreckenden Randabschnitt 15 übergeht. Die Schutzhaube 10 weist inmitten ihres Oberteils 12 eine Durchgangsöffnung 32 auf, in welcher ein mit einer Wildkrautbürste 30 bestückter Kopf einer nicht näher dargestellten Wildkrautbeseitigungsvorrichtung, insbesondere einer Motorsense oder eines Freischneiders, zu liegen kommt, wie dies in Fig. 1 schematisch dargestellt ist.

An ihrem nach unten, sich zur befestigten Fläche hin erstreckenden Randabschnitt 15 weist die Schutzhaube 12 ein flexibel deformierbares Schutzelement 14 auf, welches als zumindest bereichsweise umlaufendes Band den Randabschnitt 15 teils überdeckend an der Schutzhaube 10 angeordnet ist. Die Befestigung des Schutzelements 14 an der Schutzhaube 10 kann als unlösbare Verbindung ausgebildet sein.

Im gezeigten Ausführungsbeispiel ist das Schutzelement 14 aus einem verhältnismäßig weichem Kunststoff, insbesondere aus Weich-PVC (PVC-P) gefertigt. Es ermöglicht ein reibungsarmes Gleiten der Schutzhaube über der zu reinigenden befestigten Fläche. Es trägt gleichermaßen zur Minimierung eines Luftspalts oder eines Abstandes zwischen der Schutzhaube 10 und der befestigten Fläche bei, sodass ein unerwünschtes und unkontrolliertes Verteilen sowohl von entferntem Wildkraut, als auch von auf der Fläche herumliegenden Gegenständen, insbesondere Steinen, effektiv verhindert werden kann.

Wie anhand der Fig. 2 und 5 verdeutlicht, ist das vorzugsweise aus Weich-PVC gebildete, flexibel und elastisch deformierbare Schutzelement 14 mittels eines Halte- und Befestigungsrings 16 an der Schutzhaube 10 befestigbar. Das Schutzelement 14, der Halte- und Befestigungsring 16 als auch der Randabschnitt 15 der Schutzhaube 10 weisen in Umfangsrichtung gesehen zueinander korrespondierende Geometrien auf, sodass bei der Montage und Befestigung des Schutzelements 14 an der Schutzhaube 10 möglichst große wechselseitige Anlageflächen gebildet werden.

Die Befestigung des Schutzelements 14 am Rand 15 der Schutzhaube 10 kann mittels einzelner form- oder kraftschlüssiger Befestigungselemente, insbesondere mittels Nieten, Schrauben und ggf. unter Zuhilfenahme von Klebstoffen erfolgen. Auch kann ein stoffschlüssiges Befestigen, etwa ein Verschweißen von Rand 15 und Schutzelement 14 infrage kommen.

Es ist insbesondere vorgesehen, dass das Schutzelement 14 außen am Rand 15 der Schutzhaube 10 zur Anlage gelangt und dass der Halte- und Befestigungsring 16 an der Außenseite des Schutzelements 14, insbesondere angrenzend an dessen oberen Randabschnitt angeordnet ist. Die vorzugsweise aus einem verhältnismäßig harten Kunststoff, wie etwa Polyoxymethylen (POM) gefertigte Schutzhaube 10 und der Halte- und Befestigungsring 16 sind, wie in Fig. 5 verdeutlicht, mittels einander fluchtend zu liegen kommenden Befestigungsöffnungen 36, 38, 34 miteinander befestigbar, wobei das Schutzelement 14 von entsprechenden Befestigungsmitteln, etwa Schrauben oder Nieten, durchsetzt und zwischen Halte- und Befestigungsring 16 und dem Rand 15 der Schutzhaube 10 eingeklemmt ist.

Die am Halte- und Befestigungsring 16 und an der Schutzhaube 10 vorgesehenen Befestigungspunkte 36, 34, 36 bilden zugleich einen Befestigungspunkt und eine Drehachse 20 für die schwenkbare Anbindung eines die Schutzhaube 10 überspannenden Haltebügels 22, mit welchem die Schutzhaube 10 schwenkbar an der Wildkrautbeseitigungsvorrichtung anordenbar ist. Der Haltebügel 22 ist mit zwei gegenüberliegenden, gabelartig nach unten ragenden freien Endabschnitten am Rand 15, bzw. am Halte- und Befestigungsring 16 schwenkbar angelenkt. Er erstreckt sich im Wesentlichen parallel zur Oberseite des Oberteils 12 in einem Abstand hiervon und weist zwei parallel zueinander verlaufende Stege 26 auf, die wiederum schwenkbar an einer das Antriebsglied 28 der Motorsense einfassenden Aufnahme 24 gelagert sind.

Wie in Fig. 1 dargestellt, ist an der Antriebswelle 28 in einem unteren Abschnitt zwischen der Aufnahme 24 und der Wildkrautbürste 30 ein Anschlagselement 25 angeordnet, welches die Schwenkbarkeit der Schutzhaube 10 zumindest in einer Richtung begrenzt. In der in Fig. 1 dargestellten Konfiguration liegt die Oberseite des Oberteils 12 an der Unterseite jenes Anschlagselements an.

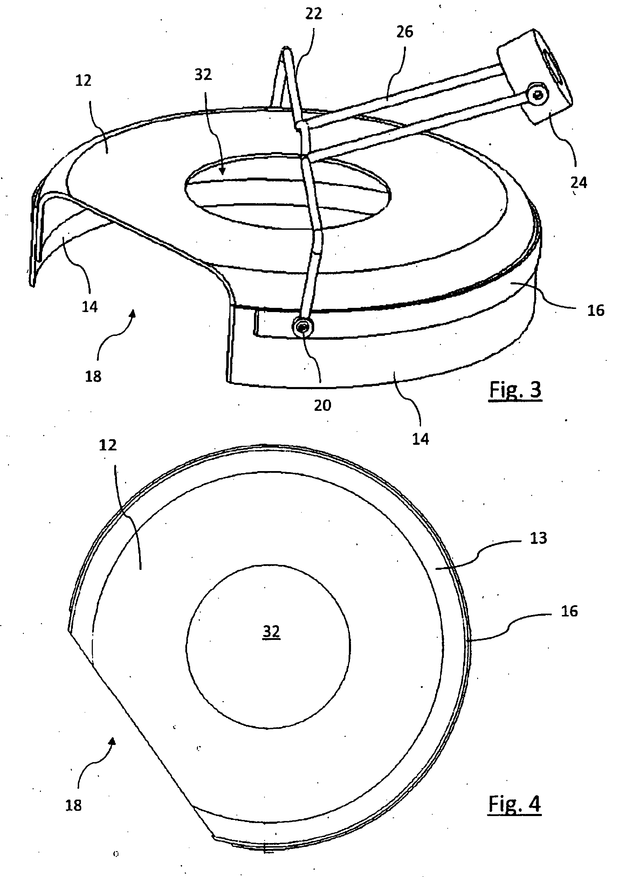

Die Schutzhaube ist in sämtlichen in den Fig. 1 bis 5 gezeigten Ausgestaltungen lediglich als eine die Wildkrautbürste 30 nur bereichsweise umschließende oder bereichsweise einfassende Schutzhaube ausgebildet. An einer dem Anwender abgewandten Seite der Schutzhaube ist eine Öffnung 18 ausgebildet, welche beispielsweise durch ein geradliniges Abtrennen eines Seitenrandes einer zylinderförmigen Schutzhaube gebildet werden kann. Die Ebene der Öffnung 18 verläuft tangential zum umlaufenden Rand 15 der Schutzhaube. Sie verläuft dabei gegenüber dem Außenumfang eines gedachten kreisförmigen Randes quasi radial nach innen versetzt. Der radiale Versatz, bzw. der zur Bildung der Öffnung in Tangentialrichtung verlaufende Schnitt der Öffnungsebene ist dergestalt gewählt, dass die Schutzhaube einen Winkelbereich von 220° bis 300°, in den Darstellungen der Fig. 1 bis 5 in etwa einen Winkelbereich von 270° umschließt.

Das heißt in Umfangsrichtung gesehen und auf die Drehrichtung der Wildkrautbürste bezogen ist ein Kreisbogen von etwa 270° von der Schutzhaube eingefasst, während die in der Haube 10 ausgebildete Öffnung 18 etwa einem Kreisbogensegment von 90° entspricht.

Durch die dem Benutzer und dem Antriebsglied 28 abgewandte Ausrichtung der Öffnung 18 kann ein gezielter und kontrollierter Abtransport von entferntem und von der befestigten Fläche losgelöstem Wildkraut erfolgen. Zugleich ermöglicht die Öffnung 18 einen entsprechenden, zielgerichteten Abtransport von Luft, die durch die im Oberteil 12 ausgebildete Durchgangsöffnung 32 angesaugt wird. Mittels der hierdurch gebildeten Luftströmung kann durch die Kombination der seitlichen Öffnung 18 und der Durchgangsöffnung 32 eine Sogwirkung erzeugt werden, die die Handhabung der Motorsense oder des Freischneiders vereinfacht und die zu einer weiteren Erhöhung der Betriebssicherheit beiträgt. Denn die Sogwirkung kann ein vorteilhaftes Niederdrücken des Motorsensenkopfs zur befestigten Fläche hin bewirken.

### Bezugszeichenliste

- 10: Schutzhaube
- 12: Oberteil
- 13: Gebogener Abschnitt
- 14: Schutzelement
- 15: Randabschnitt
- 16: Halte- und Befestigungsring
- 18: Öffnung
- 20: Schwenkachse/Anbindungspunkt
- 22: Haltebügel
- 24: Aufnahme
- 25: Anschlag
- 26: Steg
- 28: Antriebswelle
- 30: Wildkrautbürste
- 32: Durchgangsöffnung
- 34: Befestigungspunkt
- 36: Befestigungspunkt
- 38: Befestigungspunkt

## Patentansprüche

1. Schutzeinrichtung für eine tragbare Vorrichtung zur mechanischen Entfernung von Wildkraut auf befestigten Flächen, insbesondere für eine Motorsense oder für einen Freischneider, wobei die Schutzeinrichtung eine Schutzhaube (10) aufweist, die an ihrer Oberseite (12), welche in Gebrauchsstellung der befestigten Fläche abgewandt ist, eine Durchgangsöffnung (32) für eine mit einer Wildkrautbürste (30) in Wirkverbindung stehende Welle (28) aufweist und wobei die Schutzhaube (10) die drehbar gelagerte Wildkrautbürste (30) in Umfangsrichtung zumindest bereichsweise umschließt, wobei an der in Gebrauchsstellung der befestigten Fläche zugewandten Unterseite der Schutzhaube (10) ein flexibel deformierbares Schutzelement (14) angeordnet ist, **dadurch gekennzeichnet, dass** das Schutzelement eine Vielzahl mit ihren freien Enden nach unten zur befestigten Fläche hin gerichtete elastisch deformierbare Borsten aufweist.

2. Schutzeinrichtung nach Anspruch 1, wobei die Schutzhaube (10) ein in Gebrauchsstellung im Wesentlichen parallel zur befestigten Fläche ausgerichtetes scheibenartig ausgebildetes Oberteil (12) aufweist, in welchem die Durchgangsöffnung für die Welle (28) ausgebildet ist.

3. Schutzeinrichtung nach einem der vorhergehenden Ansprüche, wobei die Schutzhaube (10) einen zumindest bereichsweise ringförmig ausgebildeten, die Wildkrautbürste zumindest bereichsweise umschließenden Rand (15) aufweist, an welchem das Schutzelement (14) angeordnet ist.

4. Schutzeinrichtung nach einem der vorhergehenden Ansprüche, wobei das Schutzelement als elastisch deformierbares Band (14) aus Kunststoff, vorzugsweise aus Polyvinylchlorid (PVC), höchst vorzugsweise aus Weich-PVC (PVC-P) ausgebildet ist.

5. Schutzeinrichtung nach einem der vorhergehenden Ansprüche, wobei die Schutzhaube (10) einstückig aus einem thermoplastischen Elastomer gefertigt ist.

6. Schutzeinrichtung nach einem der vorhergehenden Ansprüche, wobei das Schutzelement (14) unter Bildung eines Überdeckungsbereichs am Rand (15) der Schutzhaube (10) anliegt und mittels eines Halterings (16) am Rand (15) befestigt ist.

7. Schutzeinrichtung nach einem der vorhergehenden Ansprüche, wobei der Innendurchmesser der in der Schutzhaube (10) ausgebildeten Durchgangsöffnung (32) 1/3 bis 2/3, vorzugsweise etwa 1/2 des Innendurchmessers der Schutzhaube (10) beträgt.

8. Schutzeinrichtung nach einem der vorhergehenden Ansprüche, wobei die Schutzhaube (10) und das flexible Schutzelement (14) die drehbar antreibbare Wildkrautbürste (30) in Umfangsrichtung in einem Winkelbereich von 220° bis 300°, vorzugsweise 240° bis 280°, höchst vorzugsweise 250° bis 270° umschließen.

9. Schutzeinrichtung nach einem der vorhergehenden Ansprüche, wobei die Schutzhaube (10) eine seitliche Öffnung (18) zum Abtransport des von der befestigten Fläche entfernten Wildkrauts aufweist.

10. Schutzeinrichtung nach Anspruch 9, wobei die seitliche Öffnung (18) mittels einer nach oben aufklappbaren Klappe verschließbar ist.

11. Schutzeinrichtung nach einem der vorhergehenden Ansprüche, wobei die Schutzhaube (10) schwenkbar an der tragbaren Wildkrautbeseitigungsvorrichtung anordenbar ist.

12. Schutzeinrichtung nach Anspruch 11, wobei an gegenüberliegenden Abschnitten des Schutzhaubenrandes (15) ein Haltebügel (22) zur schwenkbaren Befestigung der Schutzhaube (10) an der Wildkrautbeseitigungsvorrichtung angelenkt ist.

13. Schutzeinrichtung nach Anspruch 12, wobei der Haltebügel (22), der Haltering (16) und/oder das flexible Schutzelement (14) an einem oder an mehreren gemeinsamen Befestigungspunkten (20) miteinander verbunden sind.

14. Wildkrautbeseitigungsvorrichtung zur Beseitigung von Wildkraut auf befestigten Flächen mit einer von einem Motor antreibbaren Wildkrautbürste (30) und einer Schutzeinrichtung nach einem der vorhergehenden Ansprüche.

## Claims

1. Protective device for a portable apparatus for mechanically removing weeds from paved areas, in particular for a string trimmer or for a brush cutter, wherein the protective device has a protective hood (10) which, on its top side (12) which faces away from the paved area in the use position, has a through-passage opening (32) for a shaft (28) that is operatively connected to a weed brush (30), and wherein the protective hood (10) at least regionally surrounds the rotationally mounted weed brush (30) in the circumferential direction, wherein a flexibly deformable protective element (14) is arranged on the underside, which faces the paved area in the use position, of the protective hood (10), **characterized in that** the protective element has a multiplicity of elastically deformable bristles, the free ends of which are directed downwardly towards the paved area.

2. Protective device according to Claim 1, wherein the protective hood (10) has a top part (12) that is formed in the manner of a disc and is directed substantially parallel to the paved area in the use position, the through-passage opening for the shaft (28) being formed in said top part (12).

3. Protective device according to either of the preceding claims, wherein the protective hood (10) has a rim (15) that is formed at least regionally in an annular manner and at least regionally surrounds the weed brush, the protective element (14) being arranged on said rim (15).

4. Protective device according to one of the preceding claims, wherein the protective element is in the form of an elastically deformable strip (14) made of plastics material, preferably made of polyvinylchloride (PVC), most preferably made of soft PVC (PVC-P).

5. Protective device according to one of the preceding claims, wherein the protective hood (10) is manufactured in one piece from a thermoplastic elastomer.

6. Protective device according to one of the preceding claims, wherein the protective element (14) rests against the rim (15) of the protective hood (10), forming an overlapping region, and is fastened to the rim (15) by means of a retaining ring (16).

7. Protective device according to one of the preceding claims, wherein the inside diameter of the through-passage opening (32) formed in the protective hood (10) is 1/3 to 2/3, preferably about 1/2 of the inside diameter of the protective hood (10).

8. Protective device according to one of the preceding claims, wherein the protective hood (10) and the flexible protective element (14) surround the rotationally drivable weed brush (30) in the circumferential direction in an angular range of 220° to 300°, preferably 240° to 280°, most preferably 250° to 270°.

9. Protective device according to one of the preceding claims, wherein the protective hood (10) has a side opening (18) for transporting away the weeds removed from the paved area.

10. Protective device according to Claim 9, wherein the side opening (18) is closable by means of an upwardly flappable flap.

11. Protective device according to one of the preceding claims, wherein the protective hood (10) is arrangeable in a pivotable manner on the portable weed clearing apparatus.

12. Protective device according to Claim 11, wherein a retaining bracket (22) for fastening the protective hood (10) to the weed clearing apparatus in a pivotable manner is articulated on opposing sections of the rim (15) of the protective hood.

13. Protective device according to Claim 12, wherein the retaining bracket (22), the retaining ring (16) and/or the flexible protective element (14) are connected together at one or more common fastening points (20).

14. Weed clearing apparatus for clearing weeds from paved areas, having a motor-drivable weed brush (30) and a protective device according to one of the preceding claims.

## Revendications

1. Dispositif de protection pour un dispositif portable destiné à l'élimination mécanique des mauvaises herbes sur des surfaces fixes, en particulier pour une faux à moteur ou une désherbeuse, dans lequel le dispositif de protection présente un capot de protection (10) qui comporte sur son côté supérieur (12), qui est en position d'utilisation situé à l'opposé de la surface fixe, une ouverture de passage (32) pour un arbre (28) se trouvant en liaison active avec une brosse de désherbage (30) et dans lequel le capot de protection (10) entoure au moins localement en direction périphérique la brosse de désherbage (30) montée de façon rotative, dans lequel un élément de protection déformable de façon flexible (14) est disposé sur le côté inférieur du capot de protection (10) tourné vers la surface fixe dans la position d'utilisation, **caractérisé en ce que** l'élément de protection présente une pluralité de crins élastiquement déformables ayant leurs extrémités libres dirigées vers le bas en direction de la surface fixe.

2. Dispositif de protection selon la revendication 1, dans lequel le capot de protection (10) présente une partie supérieure (12) en forme de disque orientée essentiellement parallèlement à la surface fixe dans la position d'utilisation, dans laquelle est formée l'ouverture de passage pour l'arbre (28).

3. Dispositif de protection selon l'une quelconque des revendications précédentes, dans lequel le capot de protection (10) présente un bord (15), au moins localement de forme annulaire et entourant au moins localement la brosse de désherbage, sur lequel l'élément de protection (14) est disposé.

4. Dispositif de protection selon l'une quelconque des revendications précédentes, dans lequel l'élément de protection est réalisé sous la forme d'une bande élastiquement déformable (14) en matière plastique, de préférence en chlorure de polyvinyle (PVC), de préférence encore en PVC souple (PVC-P).

5. Dispositif de protection selon l'une quelconque des revendications précédentes, dans lequel le capot de protection (10) est fabriqué en une seule pièce en un élastomère thermoplastique.

6. Dispositif de protection selon l'une quelconque des revendications précédentes, dans lequel l'élément de protection (14) repose sur le bord (15) du capot de protection (10) en formant une zone de recouvrement et est fixé au bord (15) au moyen d'un anneau de maintien (16).

7. Dispositif de protection selon l'une quelconque des revendications précédentes, dans lequel le diamètre intérieur de l'ouverture de passage (32) formée dans le capot de protection (10) vaut 1/3 à 2/3, de préférence environ 1/2, du diamètre intérieur du capot de protection (10).

8. Dispositif de protection selon l'une quelconque des revendications précédentes, dans lequel le capot de protection (10) et l'élément de protection flexible (14) entourent la brosse de désherbage (30) pouvant être entraînée en rotation, dans la direction périphérique sur une zone angulaire de 220 ° à 300 °, de préférence de 240° à 280°, et de préférence encore de 250° à 270°.

9. Dispositif de protection selon l'une quelconque des revendications précédentes, dans lequel le capot de protection (10) présente une ouverture latérale (18) pour l'éjection des mauvaises herbes éliminées de la surface fixe.

10. Dispositif de protection selon la revendication 9, dans lequel l'ouverture latérale (18) peut être fermée au moyen d'un volet rabattable vers le haut.

11. Dispositif de protection selon l'une quelconque des revendications précédentes, dans lequel le capot de protection (10) peut être disposé de façon pivotante sur le dispositif portable d'élimination des mauvaises herbes.

12. Dispositif de protection selon la revendication 11, dans lequel un étrier de fixation (22) est articulé sur des parties opposées du bord (15) du capot de protection pour la fixation pivotante du capot de protection (10) sur le dispositif d'élimination des mauvaises herbes.

13. Dispositif de protection selon la revendication 12, dans lequel l'étrier de fixation (22), l'anneau de maintien (16) et/ou l'élément de protection flexible (14) sont assemblés les uns aux autres en un ou plusieurs point(s) de fixation commun(s) (20).

14. Dispositif d'élimination des mauvaises herbes destiné à l'élimination des mauvaises herbes sur des surfaces fixes avec une brosse de désherbage (30) pouvant être entraînée par un moteur et un dispositif de protection selon l'une quelconque des revendications précédentes.
